# FASCICULE DE BREVET EUROPEEN

(11) **EP 0 781 673 B1**
(45) Date de publication et mention de la délivrance du brevet: **18.04.2001**
(21) Numéro de dépôt: 96120350.2
(22) Date de dépôt: 18.12.1996
(51) Int. Cl.: B60H 1/00

(54) **Installation de chauffage et/ou de climatisation de l'habitacle d'un véhicle automobile**
Heiz-oder Klimaanlage des Fahrzeuginnenraums eines Kraftfahrzeuges
Heating and/or air conditioning installation of a motor vehicle passenger compartiment

(30) Priorité: 26.12.1995 FR 9515498
(43) Date de publication de la demande: 02.07.1997
(73) Titulaire: VALEO CLIMATISATION, 78321 La Verrière (FR)
(72) Inventeur: Breton, Michel, 78120 Rambouillet (FR)

(56) Documents cités:
- DE-U- 8 906 222
- FR-A- 1 210 949
- FR-A- 2 637 548

## Description

L'invention concerne une installation de chauffage et/ou de climatisation de l'habitacle d'un véhicule automobile.

Elle concerne plus particulièrement une installation comprenant un conduit d'alimentation en air frais se partageant en un premier conduit débouchant dans l'habitacle par des bouches d'aération et un second conduit dans lequel est placé un échangeur de chaleur pour le chauffage d'air et qui débouche dans l'habitacle par des bouches de chauffage, un volet de réglage monté dans le premier conduit pour régler le débit d'air frais qui y passe, ainsi qu'un passage de communication propre a être traversé par un flux d'air frais et reliant le premier conduit en aval du volet de réglage au second conduit en aval de l'échangeur de chaleur.

Une installation de ce type est connue d'après la publication de brevet FR-A-2 637 548.

Dans une telle installation, le volet de réglage précité permet de contrôler le flux d'air frais provenant du conduit d'alimentation en air frais et alimentant à la fois le premier conduit qui mène aux bouches d'aération et le passage de communication qui communique avec le second conduit.

Lorsque ce volet de réglage est en position de fermeture, aucun flux d'air frais ne parvient au premier conduit et au passage de communication. Il en résulte que les bouches de chauffage (qui comprennent habituellement des bouches dites "pieds" débouchant vers la partie inférieure de l'habitacle et des bouches de dégivrage du pare-brise) sont alimentées seulement par de l'air chaud provenant du second conduit.

Lorsque le volet de réglage précité est en position d'ouverture, le flux d'air frais provenant du conduit d'alimentation est partagé en un premier flux qui peut ensuite se répartir entre le premier conduit et le passage de communication, et un second flux qui traverse l'échangeur de chaleur.

Cette configuration est encore appelée "bi-level" (terme anglo-saxon) et correspond à une position à deux niveaux de température.

Si, dans cette configuration, les bouches d'aération sont fermées, le flux d'air froid accédant au premier conduit se dirige obligatoirement vers le passage de communication, ce qui crée un "retour d'air frais" vers les bouches de chauffage, et notamment les bouches de chauffage pieds.

Ceci va alors au détriment du confort des passagers puisque l'on souhaite au contraire que les bouches de chauffage précitées reçoivent de l'air chaud.

L'invention a notamment pour but de surmonter l'inconvénient précité.

Elle propose en conséquence une installation du type défini en introduction, dans laquelle le passage de communication comporte une paroi conformée propre à dévier le flux d'air frais pour qu'il vienne longer l'échangeur de chaleur et s'échauffer au contact de celui-ci avant d'atteindre l'une au moins des bouches de chauffage précitées.

Ainsi, lorsque les bouches d'aération sont fermées, on évite le "retour d'air frais" du fait que le flux d'air frais est obligé de longer ou "lécher" l'échangeur de chaleur et de s'échauffer à son contact. Le flux d'air ainsi échauffé est ensuite dirigé vers les bouches de chauffage, c'est-à-dire principalement les bouches de chauffage pieds.

Il en résulte une amélioration du confort aérothermique des passagers du véhicule.

Cette partie conformée est avantageusement réalisée sous la forme d'une chicane faisant saillie dans la direction de l'échangeur de chaleur. De préférence, cette partie conformée fait partie d'une paroi du boîtier que comporte l'installation.

Dans une forme de réalisation préférée de l'invention, cette paroi conformée est située à la jonction du passage de communication et d'une bouche de chauffage dont l'embouchure est située sensiblement en vis-à-vis de l'échangeur de chaleur.

De préférence, cette bouche de chauffage est destinée au chauffage des pieds des passagers du véhicule.

A titre d'exemple, il peut s'agir d'une bouche de chauffage destinée au chauffage des pieds des passagers dans une partie arrière du véhicule, tandis qu'il est prévu en outre un conduit menant à une bouche de chauffage destinée au chauffage des pieds des passagers, dans une partie arrière de l'habitacle.

Selon l'invention, il est prévu en outre un volet pour contrôler la bouche de chauffage pieds avant et la bouche de chauffage pieds arrière.

Selon une autre caractéristique de l'invention, l'échangeur de chaleur est un radiateur à température réglable, en particulier un radiateur parcouru par un fluide chaud dont le débit est réglable.

Dans la description qui suit, faite à titre d'exemple, on se réfère au dessin annexé, sur lequel :
- la figure unique est une vue en coupe transversale d'une installation de chauffage et/ou de climatisation selon l'invention.

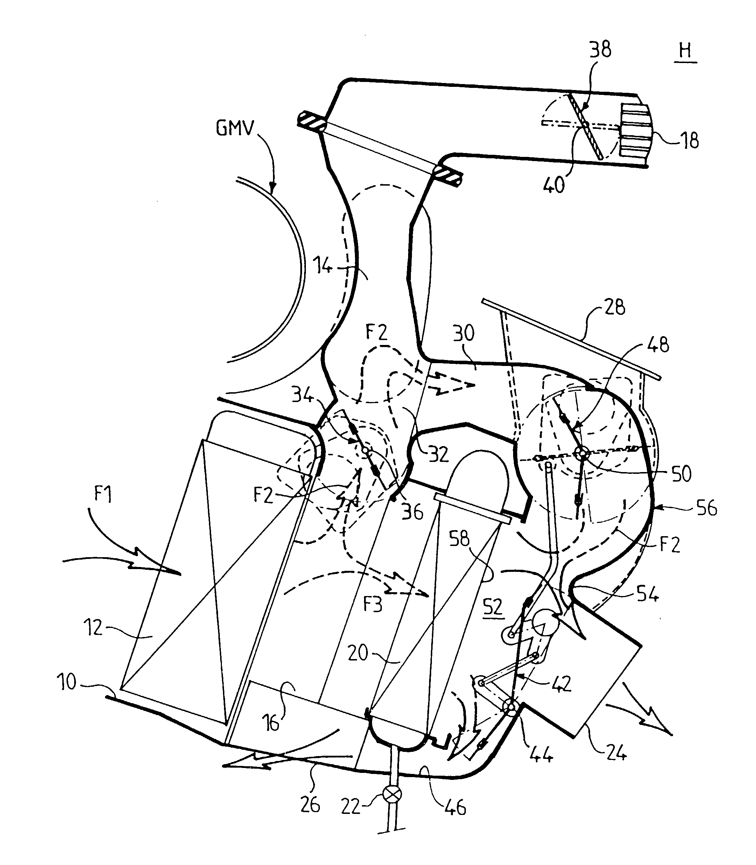

L'installation représentée à la figure 1 est destinée à assurer le chauffage et/ou la climatisation de l'habitacle H d'un véhicule automobile. Cette installation comprend un conduit 10 d'alimentation en air frais, c'est-à-dire de l'air extérieur à l'habitacle H ou de l'air recirculé à partir de l'habitacle H, sous l'action d'un groupe motoventilateur GMV.

Le conduit 10 loge un évaporateur 12 faisant partie d'un circuit de climatisation classique (non représenté), et il se partage en un premier conduit 14 et un second conduit 16. Le conduit 14 mène à au moins une bouche d'aération 18 située dans la région de la planche de bord (non représentée) du véhicule.

Le second conduit 16 loge un échangeur de chaleur 20 alimenté en fluide caloporteur (en général le liquide de refroidissement du moteur à combustion interne du véhicule) au travers d'un robinet 22 de réglage de débit de fluide caloporteur.

Le conduit 16 mène à différentes bouches de chauffage communiquant avec l'habitacle H. Ces bouches de chauffage comprennent au moins une bouche 24 dite bouche "pieds arrière" pour le chauffage des pieds des passagers à l'arrière de l'habitacle, au moins une bouche 26 dite "pieds avant" pour le chauffage des pieds des passagers à l'avant de l'habitacle, et au moins une bouche de dégivrage 28 disposée à proximité du pare-brise du véhicule.

L'installation comprend en outre un passage de communication 30 reliant le premier conduit 14 au second conduit 16. Le passage de communication 30 débouche dans le premier conduit 14 dans une zone 32 destinée à assurer le mélange de l'air frais alimenté par le premier conduit 14 et de l'air chaud alimenté par le passage de communication 30.

Un volet de réglage 34 encore appelé volet "bi-level" (terme anglo-saxon), est disposé à l'entrée du premier conduit 14, en amont de la zone 32, de manière à régler le débit d'air frais qui passe dans ce premier conduit 14 et également dans le passage de communication 30, puisque ce dernier débouche dans le premier conduit 14 en aval du volet de réglage 34.

Le volet 34 est monté à pivotement autour d'un axe 36. Il peut pivoter entre une position de fermeture dans laquelle il ferme l'accès au conduit 14 et au passage de communication 30 et une position d'ouverture dans laquelle il permet à de l'air frais, éventuellement climatisé, de parvenir dans le conduit 14 et dans le passage de communication 30.

Chacune des bouches d'aération 18 est contrôlée par un volet 38 monté pivotant autour d'un axe 40. En outre, un volet 42 monté pivotant autour d'un axe 44 contrôle l'accès à la bouche de chauffage 24 et à la bouche de chauffage 26, laquelle est alimentée par un conduit 46. Par ailleurs, un volet 48 monté pivotant autour d'un axe 50 contrôle le débit d'air au travers de la bouche de dégivrage 28.

Les bouches de chauffage 24 et 26 ainsi que la bouche de dégivrage 28 sont alimentées à partir d'une zone 52 située à la sortie du conduit 16 et recevant un flux d'air chaud issu de l'échangeur de chaleur 20 et, le cas échéant, un flux d'air frais provenant du passage de communication 30.

Une paroi conformée 54 est située à la jonction du passage de communication 30 et de la bouche de chauffage 24. Cette partie conformée 54 constitue une chicane ou un déflecteur qui fait saillie dans la direction de l'échangeur de chaleur 22 de manière à pouvoir défléchir un flux d'air frais provenant du passage de communication 30, pour l'acheminer dans la direction de l'échangeur de chaleur 20. Dans l'exemple, la partie conformée 54 fait partie d'une paroi du boîtier 56 que comporte l'installation.

Le fonctionnement de l'installation est le suivant.

Un flux d'air frais F1 alimenté par le conduit 10 traverse l'évaporateur 12 pour y être, le cas échéant, refroidi. le flux F1 pénétrant à l'entrée du conduit 16 peut être partagé entre un flux F2 parvenant au conduit 14 et au passage de communication 30 (sous le contrôle du volet 34), et un flux F3 propre à traverser l'échangeur de chaleur 20.

Lorsque le volet 34 est en position de fermeture (position non représentée), le conduit 14 et le passage de communication 30 ne reçoivent pas d'air frais. Seul un flux d'air chaud (à température réglable) parvient à la zone 52 et peut être ensuite réparti entre les bouches de chauffage 24 et 26 et la bouche de dégivrage 28, en fonction des positions respectives des volets 42 et 48.

Lorsque le volet 34 est dans une position ouverte ou entrouverte, le flux F2 parvient au conduit 14 et au passage de communication 30.

Dans le cas où le volet 38 contrôlant la bouche d'aération 18 est fermé, le flux F2 ne peut emprunter que le passage de communication 30 et de là gagner la zone 52. Du fait de la présence de la partie conformée 54, le flux F2 se trouve détourné et vient longer ou "lécher" la face 58 (face aval) de l'échangeur de chaleur 20. Ainsi, le flux d'air frais est obligé de se réchauffer avant d'atteindre la sortie 24 ou la sortie 26.

Ceci empêche un retour d'air frais préjudiciable au confort aérothermique des passagers.

Bien entendu, l'invention n'est pas limitée à la forme de réalisation décrite précédemment à titre d'exemple et s'étend à d'autres variantes. Ainsi, la partie conformée peut revêtir différentes formes, du moment qu'elle permet de dévier le flux d'air frais pour le conduire en direction de l'échangeur de chaleur fin de s'échauffer au contact de celui-ci.

## Revendications

1. Installation de chauffage et/ou de climatisation de l'habitacle d'un véhicule automobile, comprenant un conduit (10) d'alimentation en air frais se partageant en un premier conduit (14) débouchant dans l'habitacle (H) par des bouches d'aération (18) et un second conduit (16) dans lequel est placé un échangeur de chaleur (20) pour le chauffage d'air et qui débouche dans l'habitacle par des bouches de chauffage (24, 26, 28), un volet de réglage (34) monté dans le premier conduit (14) pour régler le débit d'air frais qui y passe, ainsi qu'un conduit de communication (30) reliant le premier conduit (14) en aval du volet de réglage (34) au second conduit (16) en aval de l'échangeur de chaleur (20),
caractérisée en ce que le conduit de communication (30) comporte une paroi conformée (54) propre à dévier un flux d'air frais (F2) pour qu'il vienne longer l'échangeur de chaleur (20) et s'échauffer au contact de celui-ci avant d'atteindre l'une au moins des bouches de chauffage (24, 26, 28).

2. Installation selon la revendication 1, caractérisée en ce que la partie conformée (54) est réalisée sous la forme d'une chicane faisant saillie dans la direction de l'échangeur de chaleur (20).

3. Installation selon l'une des revendications 1 et 2, caractérisée en ce que la partie conformée (54) fait partie d'une paroi du boîtier (56) que comporte l'installation.

4. Installation selon l'une des revendications 1 à 3, caractérisée en ce que la partie conformée (54) est située à la jonction du passage de communication (30) et d'une bouche de chauffage (24) dont l'embouchure est située sensiblement en vis-à-vis de l'échangeur de chaleur (20).

5. Installation selon la revendication 4, caractérisée en ce que la bouche de chauffage (24) est destinée au chauffage des pieds des passagers du véhicule.

6. Installation selon la revendication 5, caractérisée en ce que la bouche de chauffage (24) est une bouche dite "pieds arrière" destinée au chauffage des pieds des passagers dans une partie arrière de l'habitacle (H), et en ce qu'il est prévu en outre un conduit (46) menant à une bouche de chauffage (26) dite "pieds avant" destinée au chauffage des pieds des passagers dans une partie avant de l'habitacle (H).

7. Installation selon la revendication 6, caractérisée en ce qu'il est prévu un volet (42) pour contrôler la bouche de chauffage pieds arrière (24) et la bouche de chauffage pieds avant (26).

8. Installation selon l'une des revendications 1 à 7, caractérisée en ce que l'échangeur de chaleur (20) est un radiateur à température réglable, en particulier un radiateur parcouru par un fluide chaud dont le débit est réglable.

## Patentansprüche

1. Kraftfahrzeug-Innenraum-Heiz- und/oder Klimaanlage, umfassend einen Frischluftzufuhrkanal (10), der sich aufteilt in einen ersten Kanal (14), der in dem Innenraum (H) über Belüftungsausströmer (18) mündet, und einen zweiten Kanal (16), in welchem ein Wärmetauscher (20) zur Erwärmung der Luft angeordnet ist, und welcher in dem Innenraum über die Heizausströmer (24, 26, 28) mündet, eine Steuerklappe (34), die in dem ersten Kanal (14) montiert ist, um den durch diesen tretenden Frischluftdurchsatz zu steuern, sowie einen Verbindungskanal (30), der den ersten Kanal (14), flußabwärtsliegend der Steuerklappe (34), mit dem zweiten Kanal (16), flußabwärtsliegend des Wärmetauschers (20), verbindet, dadurch gekennzeichnet, dass der Verbindungskanal (30) eine angepasste Wandung (54) umfasst, die eine Frischlufströmung (F2) derart umlenken kann, dass sie entlang dem Wärmetauscher (20) verläuft und sich bei der Berührung mit diesem erwärmt, bevor sie zumindest einen der Heizausströmer (24, 26, 28) erreicht.

2. Anlage nach Anspruch 1, dadurch gekennzeichnet, dass der angepasste Abschnitt (54) in der Form einer Schikane dargestellt ist, welche in Richtung des Wärmetauschers (20) vorspringt.

3. Anlage nach einem der Ansprüche 1 und 2, dadurch gekennzeichnet, dass der angepasste Abschnitt (54) Teil einer Wandung des Gehäuses (56) ist, welches die Anlage umfasst.

4. Anlage nach einem der Ansprüche 1 bis 3, dadurch gekennzeichnet, dass der angepasste Abschnitt (54) sich beim Übergang des Verbindungsdurchtrittes (30) bezüglich eines Heizausströmers (24) befindet, dessen Mündung sich im wesentlichen gegenüberstehend dem Wärmetauscher (20) befindet.

5. Anlage nach Anspruch 4, dadurch gekennzeichnet, dass der Heizausströmer (24) vorgesehen ist für die Erwärmung der Füße von Fahrzeuginsassen.

6. Anlage nach Anspruch 5, dadurch gekennzeichnet, dass der Heizausströmer (24) ein sogenannter Heckfußausströmer ist, vorgesehen zur Erwärmung von Füßen von Insassen in dem hinteren Teil des Innenraumes (H), und dass ferner ein Kanal (46) vorgesehen ist, der zu einem Heizausströmer (26) führt, welcher "Frontfüße" genannt wird und vorgesehen ist zur Erwärmung von Füßen von Insassen in einem vorderen Abschnitt des Innenraumes (H).

7. Anlage nach Anspruch 6, dadurch gekennzeichnet, dass eine Klappe (42) vorgesehen ist, um den Ausströmer oder die Mündung (24) zur Erwärmung von Füßen im Heckbereich und den Ausströmer bzw. die Mündung (26) zur Erwärmung von Füßen im Frontbereich zu steuern.

8. Anlage nach einem der Ansprüche 1 bis 7, dadurch gekennzeichnet, dass der Wärmetauscher (20) ein Heizkörper mit einstellbarer oder steuerbarer Temperatur ist, insbesondere ein Heizkörper, welcher von einem warmen Fluid durchlaufen wird, dessen Durchsatz einstellbar oder steuerbar ist.

## Claims

1. Installation for heating and/or air conditioning the passenger compartment of a motor vehicle, comprising a conduit (10) for supplying fresh air dividing into a first conduit (14) opening out into the passenger compartment (H) through air vents (18) and a second conduit (16) in which there is placed a heat exchanger (20) for heating air and which opens out into the passenger compartment through heating vents (24, 26, 28), a regulator flap (34) mounted in the first conduit (14) for regulating the flow of fresh air passing through it, and a communication conduit (30) connecting the first conduit (14) downstream of the regulating flap (34) to the second conduit (16) downstream of the heat exchanger (20),
characterised in that the communication conduit (30) has a shaped wall (54) able to divert a fresh-air flow (F2) so that it runs along the heat exchanger (20) and heats up in contact with it before reaching at least one of the heating vents (24, 26, 28).

2. Installation according to Claim 1, characterised in that the shaped part (54) is produced in the form of a baffle projecting in the direction of the heat exchanger (20).

3. Installation according to one of Claims 1 and 2, characterised in that the shaped part (54) forms part of a wall of the casing (56) which the installation has.

4. Installation according to one of Claims 1 to 3, characterised in that the shaped part (54) is situated at the junction of the communication passage (30) and a heating vent (24) whose orifice is situated substantially opposite the heat exchanger (20).

5. Installation according to Claim 4, characterised in that the heating vent (24) is intended for heating the feet of the passengers in the vehicle.

6. Installation according to Claim 5, characterised in that the heating vent (24) is a so-called "rear feet" vent intended for heating the feet of the passengers in the rear part of the passenger compartment (H), and in that there is also provided a conduit (46) leading to a so-called "front feet" heating vent (26) intended for heating the feet of the passengers in a front part of the passenger compartment (H).

7. Installation according to Claim 6, characterised in that a flap (42) is provided for controlling the rear feet heating vent (24) and the front feet heating vent (26).

8. Installation according to one of Claims 1 to 7, characterised in that the heat exchanger (20) is an adjustable-temperature radiator, in particular a radiator with a hot fluid running through it whose flow rate is adjustable.
